# FASCICULE DE BREVET EUROPEEN

(11) **EP 1 939 409 B1**
(45) Date de publication et mention de la délivrance du brevet: **30.09.2009**
(21) Numéro de dépôt: 06127256.3
(22) Date de dépôt: 27.12.2006
(51) Int. Cl.: F01D 25/24, F01D 25/26, F16L 23/032, F16L 23/036

(54) **Système de raccordement de deux éléments sensiblement tubulaires, carter comprenant un tel système et utilisation de celui-ci**
System zur Verbindung von zwei in etwa röhrenförmigen Elementen, Gehäuse, das ein solches System umfasst, und Verwendung dieses Systems
System for connecting two roughly tubular elements, casing containing such a system and use thereof

(43) Date de publication de la demande: 02.07.2008
(73) Titulaire: Techspace Aero, 4041 Milmort - Herstal (BE)
(72) Inventeur: Delobel, Pierre, 4031 Angleur (BE); Lhoest, André, 4500 Huy (BE)
(74) Mandataire: David, Daniel

(56) Documents cités:
- EP-A- 1 505 259
- EP-A- 1 698 761
- EP-A1- 0 590 310
- EP-A2- 1 158 142
- GB-A- 2 384 829

## Description

La présente invention se rapporte à un système de raccordement de deux éléments sensiblement tubulaires, en particulier deux viroles d'un carter de compresseur axial.

Les compresseurs axiaux, par exemple dans des turboréacteurs, sont généralement formés par une succession axiale de rotors et stators. Chaque rotor est un ensemble d'aubes rotatives fixées à l'arbre d'entraînement du compresseur. Chaque stator est un ensemble d'aubes de redressement stationnaires fixées au carter du compresseur. Chaque rotor est suivi d'un stator, de manière à former un étage de compresseur.

Un turboréacteur peut comporter une pluralité de compresseurs successifs, par exemple un compresseur basse pression monté devant un compresseur haute pression, où chacun comporte un arbre d'entraînement différent.

Généralement, un carter de compresseur axial est formé par une série d'éléments sensiblement tubulaires, ou viroles, raccordés successivement. Chaque virole entoure généralement un étage de compresseur, c'est-à-dire un rotor et un stator. Une virole comportera donc normalement l'ensemble d'aubes stationnaires formant le stator, ou bien des moyens de fixation desdites aubes stationnaires, ainsi qu'une surface intérieure abradable afin d'éviter un frottement excessif avec les aubes du rotor.

Les paires de viroles successives sont raccordées par des systèmes de raccordement comportant :
a) deux brides, chacune étant sensiblement annulaire et comportant une face proximale destinée à être solidaire d'une des deux viroles successives, et une face distale, et
b) des éléments de fixation pour serrer les faces distales des deux brides l'une contre l'autre, de manière à pouvoir transmettre des efforts axiaux de traction et de compression entre les deux brides assemblées par serrage.

Par face distale, on entend la face plus éloignée du corps de la virole, par face proximale, celle plus proche du corps de la virole. Dans l'état de la technique, on emploie comme éléments de fixation des boulons traversant des orifices agencés dans les brides. Toutefois cet arrangement présente plusieurs inconvénients.

Dans le cas d'une rupture d'aube de compresseurs, des efforts circonférentiels non négligeables viennent s'ajouter aux efforts axiaux et radiaux entre les paires de viroles adjacentes. Ces efforts ont un effet de cisaillement sur les boulons du système de raccordement, ce qui oblige à utiliser un grand nombre de boulons ayant un diamètre considérable pour le raccordement des viroles. Afin de solutionner le problème de l'encombrement des boulons, il est nécessaire de surdimensionner les brides en augmentant le diamètre extérieur.

En plus des inconvénients de coût et poids inhérents à un tel surdimensionnement, l'encombrement radial des brides élargies présente aussi d'autres problèmes. Ainsi, dans de nombreuses applications, cet encombrement rend les opérations de montage et démontage difficiles, à cause d'interférences entre les brides et des éléments externes au compresseur, comme par exemple des capots. En particulier, dans le domaine des turboréacteurs, il peut_être souhaitable de pouvoir démonter le compresseur basse pression vers l'arrière pour faciliter la maintenance. Toutefois, si les brides de raccordement des viroles du carter du compresseur basse pression sont trop encombrantes, elles vont buter contre le carter intermédiaire placé généralement à l'arrière du compresseur basse pression et servant à soutenir l'ensemble du turboréacteur.

EP 1 158 142 divulgue un système de raccordement de deux éléments tubulaires comme viroles d'un carter de compresseur axial selon le préambule de la revendication 1.

L'invention a pour but de pallier les inconvénients de l'état de la technique en procurant un système de raccordement d'éléments tubulaires permettant de minimiser l'encombrement radial d'un tel système en particulier dans le cas de viroles de carter de compresseur axial.

Pour résoudre ce problème, il est prévu suivant l'invention, un système de raccordement de deux éléments sensiblement tubulaires, en particulier de viroles d'un carter de compresseur axial tel qu'indiqué au début, caractérisé en ce que lesdits éléments de fixation comprennent au moins un verrou de jonction prévu pour être logé dans au moins une cavité formée par lesdites deux brides assemblées, chaque cavité et chaque verrou ayant une forme au moins partiellement complémentaire, chaque verrou présentant des saillies munies de moyens de fixation et au moins un collier présentant deux faces latérales agencées pour prendre appui sur les faces proximales des deux brides assemblées, et comportant des moyen de fixation complémentaires audits moyens de fixations desdites saillies dudit au moins un verrou de jonction.

De cette façon, les brides connectées positivement par le verrou et recouvertes d'un ou de plusieurs colliers, à intervalles réguliers ou non, permettent d'utiliser plusieurs points de serrage pour diminuer l'influence des frottements pendant le serrage. L'encombrement des éléments de fixation est réduit, ce qui permet de réduire nettement le diamètre extérieur des brides. Dès lors, les éléments de fixation peuvent être quantitativement moins nombreux que les boulons utilisés dans l'art antérieur, ce qui permet de gagner du temps pour le démontage et le montage des carters. La pression de contact entre les brides est répartie de manière optimale, ce qui diminue les risques de rupture des éléments de fixation des brides. Le poids et le coût sont donc également réduits.

Avantageusement, ledit verrou comporte deux parties distinctes et de préférence séparées, chacune des deux parties comportant au moins une, de préférence deux, desdites saillies munies desdits moyens de fixation. Ceci permet de limiter le poids du système de raccordement.

De manière particulièrement avantageuse, le système de raccordement comprend une pluralité de verrous, une pluralité de colliers et les brides assemblées comprennent ou forment une pluralité de cavités. De cette façon, les éléments de fixation permettent d'augmenter la résistance de la fixation des brides.

En effet, alors que dans un système comprenant un seul collier de raccordement, si un point de liaison se rompt c'est toute la liaison des brides qui est en péril, puisque avec un point de liaison rompu, le système de raccordement est ouvert et les brides ne sont plus assemblées. Grâce au système de raccordement selon l'invention, la rupture d'un élément de fixation n'aura pas pour résultat le désassemblage des brides car les éléments de fixation sont segmentés. De même, par l'utilisation de segments, les efforts de torsion circonférentiels sont transmis de part et d'autre de la bride à celle-ci car les précontraintes sur la circonférence sont rendues homogènes. De même, l'utilisation de segments permet de répartir les frottements lors du serrage des segments (des colliers) et permet donc d'obtenir une meilleure répartition des efforts de précontrainte sur la circonférence des brides par un serrage progressif des moyens de fixation.

Dans une forme de réalisation particulière, chaque cavité et chaque verrou comprennent une première, une deuxième et une troisième face, ladite première face de chaque cavité et de chaque verrou étant sensiblement parallèles à la circonférence de chacune desdites brides et complémentaires l'une de l'autre, lesdites deuxième et troisième faces de chaque cavité s'étendant à partir de et formant un angle α avec la première face de chaque cavité, la deuxième face et la troisième face de chaque verrou étant respectivement agencée pour être en contact ajusté avec la deuxième face et la troisième face de chaque cavité.

De cette façon, chaque verrou est connecté de manière positive aux brides et assure tant une rétention radiale que circonférentielle des brides assemblées. Avantageusement, l'angle α est compris dans une plage allant de 15° à 90°, de préférence de 30° à 60°. Ces valeurs augmentent l'effet de rétention de chaque verrou.

De préférence, chaque verrou et les brides assemblées présentent une largeur identique, ce qui permet une répartition optimale des contraintes.

Dans une forme de réalisation particulièrement avantageuse, la face proximale et la face distale de chacune des brides sont inclinées l'une par rapport à l'autre d'un angle β, la face distale de chaque bride étant perpendiculaire à un axe longitudinal dudit élément tubulaire, et dans lequel les faces latérales dudit collier sont également inclinées l'une par rapport à l'autre d'un angle γ inférieur à 2xβ.

Les flancs des brides (faces proximales) sont sensiblement coniques grâce à l'inclinaison entre la face proximale et la face distale des brides d'un angle β (la face distale étant perpendiculaire à l'axe longitudinal de l'élément tubulaire) pour obtenir une précontrainte axiale qui assure une transmission adéquate des efforts dans l'assemblage. L'angle γ étant inférieur à 2xβ, le collier doit être déformé pour chevaucher les brides assemblées et donc la mémoire du matériau constituant le collier ainsi que la force de déformation améliore le contact entre les brides. Ceci permet de réduire l'éventualité d'une perte d'une partie des efforts de précontrainte qui peut conduire à un glissement des brides et donc à une dégradation de l'intégrité de l'assemblage.

Le contrôle de la précontrainte peut être réalisé par la mesure du couple de serrage des moyens de fixation, éventuellement complétée par la mesure de la déformation des segments, dans des zones repérées et dont la finition doit permettre une mesure précise. La géométrie permet une répartition des contraintes dans les différentes pièces de l'assemblage, y compris dans le raccordement des brides avec les viroles. L'effort de serrage entre les brides est réparti sur toute la surface de contact entre celles-ci et les segments. On évite donc les contraintes locales importantes qui se produisent dans le cas de brides classiques de l'art antérieur (sous les têtes des vis et des écrous).

Avantageusement, ledit verrou est un prisme plein à section trapézoïdale. Ceci renforce la puissance de l'assemblage et améliore la répartition des contraintes dans l'assemblage.

De préférence, les moyens de fixation des saillies dudit verrou de jonction comprennent un orifice dans lequel s'insère une tige, en particulier une tige filetée et dans lequel les moyens de fixation dudit collier comprennent également des saillies munies d'orifices dans lequel ladite tige filetée vient s'insérer. Ceci permet d'imposer un serrage progressif et graduel. Particulièrement, on enfilera sur les tiges filetées des écrous à pans ou à jupe.

Afin d'améliorer encore la répartition des contraintes dans l'assemblage, chaque collier est agencé pour chevaucher en partie chaque verrou lorsque les moyens de fixation des saillies dudit verrou sont connectés audits moyens de fixation dudit collier.

D'autres formes de réalisation du système de raccordement suivant l'invention sont indiquées dans les revendications annexées.

La présente invention se rapporte également à un carter de compresseur axial, par exemple d'un compresseur basse pression d'un turboréacteur ou turbopropulseur, comportant une pluralité de viroles dont au moins deux sont adjacentes et raccordées par un système de raccordement selon l'invention.

Avantageusement, au moins une desdites deux viroles adjacentes comporte un stator et/ou une surface intérieure abradable.

D'autres formes de réalisation du carter suivant l'invention sont indiquées dans les revendications annexées.

De plus, la présente invention se rapporte à l'utilisation d'un système de raccordement pour raccorder au moins deux viroles adjacentes d'un carter de compresseur axial, par exemple de compresseur basse pression d'un turboréacteur ou turbopropulseur, particulièrement, au moins une desdites deux viroles adjacentes comporte un stator et/ou une surface intérieure abradable.

D'autres formes de réalisation de l'utilisation suivant l'invention sont indiquées dans les revendications annexées.

D'autres caractéristiques, détails et avantages de l'invention ressortiront de la description donnée ci-après, à titre non limitatif et en faisant référence aux dessins annexés.

La figure 1 est une vue en coupe d'un système de raccordement de l'état de la technique.

La figure 2 est une vue en perspective du système de raccordement selon l'invention

La figure 3 est une vue de profil de brides assembles par le système de raccordement selon l'invention.

La figure 4 est une vue en coupe transversale des brides assemblées par le système de raccordement selon l'invention.

Sur les figures, les éléments identiques ou analogues portent les mêmes références.

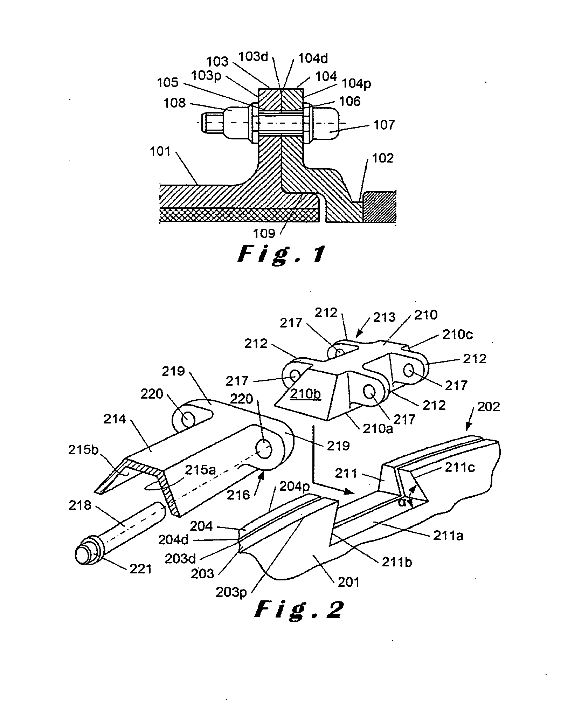

Comme on peut voir à la figure 1, dans l'état de la technique, chacune des viroles 101 et 102 d'un carter de compresseur basse pression d'un turboréacteur double-flux comporte une bride, respectivement désignée 103 et 104. Chacune de ces brides 103,104 présente une face proximale, respectivement désignée 103p et 104p, et une face distale, respectivement désignée 103d et 104d. Dans chaque bride 103,104, un ensemble d'orifices, respectivement désignés 105 et 106, relient la face proximale 103p,104p à la face distale 103d,104d. Les orifices 105 de la bride 103 sont alignés avec les orifices 106 de la bride 104, de manière à pouvoir y faire passer des vis 107. En serrant ces vis 107 avec des écrous 108, il est donc possible d'établir un raccordement axial entre les viroles 101 et 102.

Tandis que la transmission des efforts radiaux est assurée par l'emboîtement de surfaces de centrage 109 des viroles 101,102, les boulons 107 doivent reprendre, outre la traction axiale, la torsion circonférentielle entre les brides 103,104. Une telle torsion soumet les boulons 107 à des efforts de cisaillement, ce qui force à augmenter leur section travaillante, et donc le diamètre des orifices 105,106 et la hauteur des brides 103,104.

La figure 2 illustre le système de raccordement selon l'invention. Comme on peut le voir, le système de raccordement selon l'invention permet de serrer ensemble deux viroles 201, 202 d'un carter de compresseur axial, par exemple carter de compresseur basse pression d'un turboréacteur double-flux.

Comme on l'a mentionné précédemment, le système de raccordement selon l'invention permet de raccorder deux viroles 201, 202 par l'intermédiaire de deux brides 203, 204 sensiblement annulaires. Chaque bride 203, 204 comporte une face proximale 203p,204 p et une face distale 203d, 204d.

Le système de raccordement comprend des éléments de fixation pour serrer les faces distales 203d, 204d des deux brides l'une contre l'autre. Les éléments de fixation permettent de transmettre des efforts axiaux de traction et de compression entre les deux brides assemblées par serrage. Les éléments de fixation comprennent au moins un verrou de jonction 210 prévu pour être logé dans au moins une cavité 211 formée par lesdites deux brides 203, 204 assemblées. Comme on peut le voir aisément, chaque cavité 211 et chaque verrou 210 présente une forme au moins partiellement complémentaire. En effet, chaque cavité 211 ayant une forme complémentaire à celle d'un verrou 210 et chaque verrou 210 comprennent tous deux une première 210a, 211a, une deuxième 210b, 211 b et une troisième face 210c, 211 c.

Bien entendu, les formes des cavités 211 peuvent être différentes l'une de l'autre au sein d'un même système de raccordement pour autant que chaque cavité 211 comporte son verrou de jonction 210 présentant une forme complémentaire à la forme de la cavité 211 dans laquelle il doit se loger.

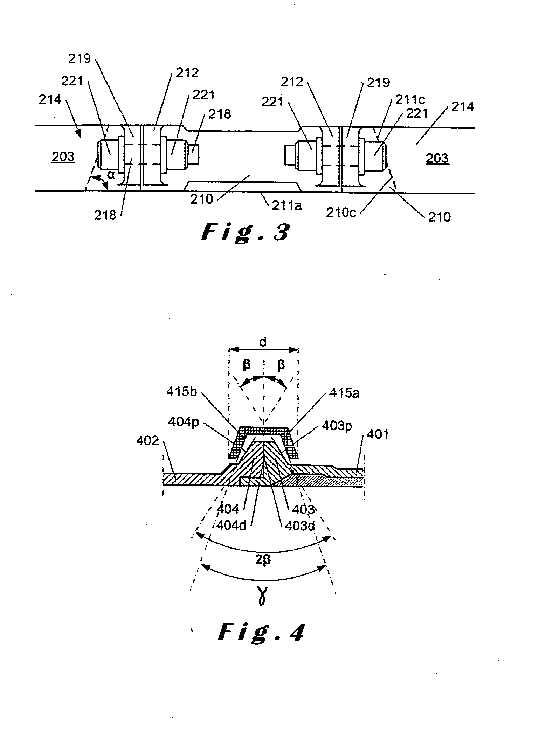

La première face 211a de la cavité 211 et la première face 210a du verrou 210 sont complémentaires l'une de l'autre sur au moins une partie de leur longueur. Les deuxième 211 b et troisième faces 211c de la cavité 211 s'étendant à partir de la première face 211a et forment un angle α avec celle-ci. La deuxième face 210b et la troisième face 210c du verrou 210 sont respectivement agencées pour être en contact ajusté avec la deuxième face 211 b et la troisième face 211 c de la cavité 211 de manière à assurer une rétention radiale du système d'assemblage et une rétention circonférentielle des brides assemblées 203, 204. Il est avantageux que l'angle α (figure 3) soit compris dans une plage allant de 15° à 90°, de préférence de 30° à 60°.

Chaque verrou 210 comprend en outre des saillies 212 munies de moyens de fixation 213. Avantageusement, le verrou 210 et les brides 203, 204 assemblées présentent une largeur identique et particulièrement au niveau de la surface de contact qui est la première face 210a, 211a du verrou 210 et de la cavité 211. Les brides 203, 204 sont avantageusement de section transversale trapézoïdale et donc les verrous 210 comporteront une section transversale sensiblement identique et seront de préférence, sans toutefois y être limité, des corps pleins.

Le système de raccordement comprend également au moins un collier 214 présentant deux faces latérales 215a,b agencées pour prendre appui sur les faces proximales 203p, 204p des deux brides 203, 204 assemblées. Des moyen de fixation complémentaires 216 auxdits moyens de fixations 213 des saillies 212 sont également prévus.

Lorsque les brides 203, 204 sont rapprochées l'une de l'autre, par exemple, lors du montage des carters ensemble, chaque verrou de jonction 210 est inséré dans sa cavité 211 correspondante formée par les brides 203, 204 assemblées. Ensuite, le collier 214 est disposé à cheval sur les brides 203, 204 des deux viroles 201, 202 et les éléments de fixation 213 du verrou 210 sont engagés par les moyens de fixation 216 de chaque collier 214. Les moyens de fixation 216 prévus sur les saillies 212 du verrou de jonction 210 comprennent un orifice 217 dans lequel s'insère une tige 218, en particulier une tige filetée. Les moyens de fixation 216 dudit collier comprennent également des saillies 219 munies d'orifices 220 dans lequel ladite tige filetée 218 déjà insérée ou non dans l'orifice 217 des saillies 212 du verrou de jonction 210 vient s'insérer. Ensuite, des écrous 221 sont vissés sur la tige filetée 218 insérée dans ledit orifice 217 ou 220 (voir par exemple la figure 3). Bien entendu, il est possible selon l'invention que la tige filetée 218 soit solidaire soit des saillies 212 du verrou 210, soit des saillies 219 du collier 214 afin de réduire le nombre d'écrou 221 à utiliser pour l'assemblage. De même d'autres moyens de fixations sont envisageables dans la présente invention et sont tous considérés comme des équivalents de ceux mentionnés ci-dessus.

Chaque collier 214 est donc agencé pour chevaucher en partie chaque verrou 210 lorsque les moyens de fixation 213 des saillies 212 dudit verrou 210 sont connectés audits moyens de fixation 216 dudit collier 214. Ce chevauchement d'une partie de chaque verrou 210 n'est toutefois pas indispensable.

Comme on peut le voir à la figure 4, La face proximale 404p, 403p et la face distale 404d, 403d de chacune des brides 403,404 sont inclinées l'une par rapport à l'autre d'un angle β, la face distale 404d, 403d, de chaque bride 403,404 étant perpendiculaire à un axe longitudinal L de la virole 401, 402 (élément tubulaire). Les faces latérales 415a, 415b dudit collier 414 sont également inclinées l'une par rapport à l'autre d'un angle y inférieur à 2xβ.

Les flancs (faces proximales 404p, 403p) des brides 403, 404 (faces latérales) sont donc coniques pour obtenir une précontrainte axiale qui assure une transmission adéquate des efforts dans l'assemblage. L'angle y étant inférieur à 2xβ, le collier 414 doit être déformé pour chevaucher les brides 403, 404 assemblées et donc la mémoire du matériau constituant le collier 414 ainsi que la force de déformation améliore le contact entre les brides 403, 404. Ceci permet de réduire l'éventualité d'une perte d'une partie des efforts de précontrainte qui peut conduire à un glissement des brides et donc à une dégradation de l'intégrité de l'assemblage.

De cette façon, la mesure de la précontrainte peut être réalisée par la mesure du couple de serrage des vis éventuellement complétée par la mesure de la déformation des segments (distance d à la figure 4 en relation avec l'angle y).

Le nombre de cavités présentes dans les brides assemblées de deux éléments tubulaires est variable en fonction de la résistance souhaitée de l'assemblage. De même, le nombre de verrous et de colliers sera de préférence égal à celui du nombre de cavités.

Il est bien entendu que la présente invention n'est en aucune façon limitée aux formes de réalisations décrites ci-dessus et que bien des modifications peuvent y être apportées sans sortir du cadre des revendications annexées.

Par exemple, conformément à un autre mode de réalisation, le verrou de jonction et le collier sont fabriqués en une seule pièce, ce qui, quoique légèrement plus complexe à fabriquer permet une meilleure répartition des contraintes.

Conformément à un autre mode de réalisation, le verrou de jonction est constitué de deux parties distinctes et séparées, chacune s'appuyant respectivement sur chacune des deuxième et troisième faces et de la cavité.

Conformément à encore un autre mode de réalisation, les saillies des colliers sont remplacées par des moyens de fixation distincts rapportés sur les colliers.

## Revendications

1. Système de raccordement de deux éléments sensiblement tubulaires (101, 201, 401, 102, 202, 402), en particulier de viroles (101, 201, 401, 102, 202, 402) d'un carter de compresseur axial, comportant :
a) deux brides (103, 203, 403, 104, 204, 404), chacune étant sensiblement annulaire et comportant une face proximale (103p, 203p, 403p, 104p, 204p, 404p) destinée à être solidaire d'un des deux éléments (101, 201, 401, 102, 202, 402) et une face distale (103d, 203d, 403d, 104d, 204d, 404d),
b) des éléments de fixation pour serrer les faces distales (103d, 203d, 403d, 104d, 204d, 404d) des deux brides (103, 203, 403, 104, 204, 404) l'une contre l'autre, de manière à pouvoir transmettre des efforts axiaux de traction et de compression entre les deux brides (103, 203, 403, 104, 204, 404) assemblées par serrage,
**caractérisé en ce que** lesdits éléments de fixation comprennent au moins un verrou de jonction (210) prévu pour être logé dans au moins une cavité (211) formée par lesdites deux brides (103, 203, 403, 104, 204, 404) assemblées, chaque cavité (211) et chaque verrou (210) ayant une forme au moins partiellement complémentaire, chaque verrou (210) présentant des saillies (212) munies de moyens de fixation (213, 217, 218, 221) et au moins un collier (214) présentant deux faces latérales (215a, 215b) agencées pour prendre appui sur les faces proximales (103p, 203p, 403p, 104p, 204p, 404p) des deux brides assemblées, et comportant des moyen de fixation complémentaires (216, 218, 219, 220, 221) audits moyens de fixations (213, 217, 218, 221) desdites saillies (212) dudit au moins un verrou de jonction (210).

2. Système de raccordement selon la revendication 1, dont ledit verrou (210) comporte deux parties distinctes et préférablement séparées, chacune des deux parties comportant au moins une, de préférence deux, desdites saillies (212) munies desdits moyens de fixation (213, 217, 218, 221).

3. Système de raccordement selon l'une des revendications 1 ou 2, dans lequel chaque cavité (211) et chaque verrou (210) comprennent chacun une première (210a, 211a), une deuxième (210b, 211b) et une troisième face (210c, 211c), ladite première face (210a, 211a) de chaque cavité (211) et de chaque verrou (210) étant sensiblement parallèles à la circonférence de chacune desdites brides (103, 203, 403, 104, 204, 404) et complémentaires l'une de l'autre, lesdites deuxième (211 b) et troisième faces (211c)de chaque cavité s'étendant à partir de et formant un angle α avec la première face (211 a) de chaque cavité (211), la deuxième face (210b) et la troisième face (210c) de chaque verrou (210) étant respectivement agencée pour être en contact ajusté avec la deuxième face (211b) et la troisième face (211c) de chaque cavité (211).

4. Système de raccordement selon l'une des revendications 1 à 3, dans lequel l'angle α est compris dans une plage allant de 15° à 90°, de préférence de 30° à 60°.

5. Système de raccordement selon l'une des revendications précédentes, dans lequel chaque verrou (210) et les brides assemblées (103, 203, 403, 104, 204, 404) présentent une largeur identique.

6. Système de raccordement selon l'une des revendications précédentes, dans lequel la face proximale (103p, 203p, 403p, 104p, 204p, 404p) et la face distale (103d, 203d, 403d, 104d, 204d, 404d) de chacune des brides (103, 203, 403, 104, 204, 404) sont inclinées l'une par rapport à l'autre d'un angle β, la face distale de chaque bride (103d, 203d, 403d, 104d, 204d, 404d) étant perpendiculaire à un axe longitudinal dudit élément tubulaire (101, 201, 401, 102, 202, 402), et dans lequel les faces latérales (215a, 215b) dudit collier (214) sont également inclinées l'une par rapport à l'autre d'un angle γ inférieur à 2xβ.

7. Système de raccordement selon l'une des revendications précédentes, dans lequel ledit verrou (210) est un prisme plein à section trapézoïdale.

8. Système de raccordement selon l'une des revendications précédentes, dans lequel les moyens de fixation (213, 217, 218, 221) des saillies (212) dudit verrou de jonction (210) comprennent un orifice (217) dans lequel s'insère une tige (218), en particulier une tige filetée (218) et dans lequel les moyens de fixation complémentaires, (216, 218, 219, 220, 221) dudit collier (214) comprennent également des saillies (219) munies d'orifices (220) dans lequel ladite tige filetée (218) vient s'insérer.

9. Système de raccordement selon l'une des revendications précédentes, dans lequel ledit collier est agencé pour chevaucher en partie ledit verrou lorsque les moyens de fixation des saillies dudit verrou sont connectés audits moyens de fixation dudit collier.

10. Carter de compresseur axial, par exemple d'un compresseur basse pression d'un turboréacteur ou turbopropulseur, comportant une pluralité de viroles (101, 201, 401, 102, 202, 402) dont au moins deux sont adjacentes et raccordées par un système de raccordement selon une des revendications précédentes.

11. Carter de compresseur axial selon la revendication 10, où au moins une desdites deux viroles (101, 201, 401, 102, 202, 402) adjacentes comporte un stator et/ou une surface intérieure abradable.

12. Utilisation d'un système de raccordement selon l'une des revendications 1 à 9 pour raccorder au moins deux viroles (101, 201, 401, 102, 202, 402) adjacentes d'un carter de compresseur axial, par exemple de compresseur basse pression d'un turboréacteur ou turbopropulseur.

13. Utilisation selon la revendication 12, où au moins une desdites deux viroles (101, 201, 401, 102, 202, 402) adjacentes comporte un stator et/ou une surface intérieure abradable.

## Claims

1. A system for connecting two substantially tubular (101, 201, 401, 102, 202, 402) members, in particular, ferrules (101, 201, 401, 102, 202, 402) of an axial compressor case, comprising :
a) two flanges (103, 203, 403, 104, 204, 404), each being substantially annular and comprising a proximal face (103p, 203p, 403p, 104p, 204p, 404p) adapted to be integral with one of both members (101, 201, 401, 102, 202, 402) and a distal face (1 03d, 203d, 403d, 104d, 204d, 404d),
b) members for pressing the distal faces of both flanges (103d, 203d, 403d, 104d, 204d, 404d) one against the other (103, 203, 403, 104, 204, 404), so as to be able to transmit tensile and compression axial stresses between both flanges (103, 203, 403, 104, 204, 404) assembled through clamping,
**characterized in that** said fixing members comprise at least one junction latch (210), provided for being arranged in at least one cavity (211) formed by said both assembled flanges (103, 203, 403, 104, 204, 404), each cavity (211) and each latch (210) having an at least partially complementary shape, each latch (210) having projections (212) provided with securing means (213, 217, 218, 221) and at least one collar (214) having two side faces (215a, 215b) arranged so as to abut on the proximal faces (1 03p, 203p, 403p, 104p, 204p, 404p) of both assembled flanges, and comprising securing means complementary (216, 218, 219, 220, 221) to said securing means (213, 217, 218, 221) of said projections (212) of said at least one junction latch (210).

2. A connecting system according to claim 1, wherein said latch (210) comprises two distinct, preferably separated parts, each of both parts comprising at least one, preferably two, of said projections (212) provided with said securing means (213, 217, 218, 221).

3. A connecting system according to claim 1 or 2, wherein each cavity (211) and each latch (210) each comprise a first (210a, 211 b), a second (210b, 211 b) and a third face (210c, 211 c), said first face (210a, 211 a) of each cavity (211) and of each latch (210) being substantially parallel to the circumference of each said flanges (103, 203, 403, 104, 204, 404) and mutually complementary, said second (211 b) and third faces (211 c) of each cavity extending from and forming an angle α with the first face (211 a) of each cavity (211), the second face (21 0b) and the third face (210c) of each latch (210) being respectively provided so as to be in tight contact with the second face (211 b) and the third face (211 c) of each cavity (211).

4. A connecting system according to anyone of claims 1 to 3, wherein the angle α is within a range varying from 15° to 90°, preferably 30° to 60°.

5. A connecting system according to any of the preceding claims, wherein each latch (210) and the assembled flanges (103, 203, 403, 104, 204, 404) have an identical width.

6. A connecting system according to any of the preceding claims, wherein the proximal face (103p, 203p, 403p, 104p, 204p, 404p) and the distal face (103d, 203d, 403d, 104d, 204d, 404d) of each of both flanges (103, 203, 403, 104, 204, 404) are tilted one with respect to the other by an angle β, the distal face of each flange (103d, 203d, 403d, 104d, 204d, 404d) being perpendicular to a longitudinal axis of said tubular member (101, 201, 401, 102, 202, 402), and wherein the side faces (215a, 215b) of said collar (214) are also tilted one with respect to the other by an angle γ lower than 2xβ.

7. A connecting system according to any of the preceding claims, wherein said latch (210) is a solid prism with a trapezoidal section.

8. A connecting system according to any of the preceding claims, wherein the securing means (213, 217, 218, 221) of the projections (212) of said junction latch (210) comprise a hole (217) in which a stem (218) is inserted, more particularly a threaded stem (218) and wherein securing means complementary (216, 218, 219, 220, 221) to said collar (214) also comprise projections (219) provided with holes (220) in which said threaded stem (218) is inserted.

9. A connecting system according to one of the preceding claims, wherein said collar is provided so as to partially overlap said latch when securing means of projections of said latch are connected with said securing means of said collar.

10. An axial compressor case, for example, a low pressure compressor of a turbojet or a turboprop, comprising a plurality of ferrules (101, 201, 401, 102, 202, 402), at least two of which are adjacent and connected by means of a connecting system according to any of the preceding claims.

11. An axial compressor case according to claim 10, where at least one of said two adjacent ferrules (101, 201, 401, 102, 202, 402) comprises a stator and/or an abradable inner surface.

12. The use of a connecting system according to any of claim 1 to 9 for connecting at least two adjacent ferrules (101, 201, 401, 102, 202, 402) of an axial compressor case, for example, a low pressure compressor of a turbojet or a turboprop.

13. The use according to claim 12, wherein at least one of said two adjacent ferrules (101, 201, 401, 102, 202, 402) comprises a stator and/or an abradable inner surface.

## Patentansprüche

1. System zum Verbinden von zwei im Wesentlichen röhrenförmigen Elementen (101, 201, 401, 102, 202, 402), insbesondere von Rohrringen (101, 201, 401, 102, 202, 402) eines Axialkompressorgehäuses, umfassend:
a) zwei Flansche (103, 203, 403, 104, 204, 404), wobei jeder im Wesentlichen ringförmig ist und eine Proximalfläche (103p, 203p, 403p, 104p, 204p, 404p), die dazu gedacht ist, mit einem der beiden Elemente (101, 201, 401, 102, 202, 402) einstückig zu sein, und eine Distalfläche (103d, 203d, 403d, 104d, 204d, 404d) umfasst,
b) Befestigungselemente zum Andrücken der Distalflächen (103d, 203d, 403d, 104d, 204d, 404d) der beiden Flansche (103, 203, 403, 104, 204, 404) aneinander, um axiale Zug- und Presskräfte zwischen den beiden durch Andrücken zusammengefügten Flanschen (103, 203, 403, 104, 204, 404) übertragen zu können,
**dadurch gekennzeichnet, dass** die Befestigungselemente mindestens einen Anschlussriegel (210) umfassen, der bereitgestellt wird, um in mindestens einer Vertiefung (211) aufgenommen zu werden, die von den beiden zusammengefügten Flanschen (103, 203, 403, 104, 204,404) gebildet wird, wobei jede Vertiefung (211) und jeder Riegel (210) eine Form aufweist, die sich mindestens teilweise ergänzt, wobei jeder Riegel (210) Vorsprünge (212), die mit Befestigungsmitteln (213, 217, 218, 221) versehen sind, und mindestens eine Schelle (214), die zwei Seitenflächen (215a, 215b) aufweist, die angeordnet sind, um sich auf den Proximalflächen (103p, 203p, 403p, 104p, 204p, 404p) der beiden zusammengefügten Flansche abzustützen, aufweist und Befestigungsmittel (216, 218, 219, 220, 221), welche die Befestigungsmittel (213, 217, 218, 221) der Vorsprünge (212) des mindestens einen Anschlussriegels (210) ergänzen, umfasst.

2. Verbindungssystem nach Anspruch 1, wobei der Riegel (210) zwei unterschiedliche und bevorzugt getrennte Teile umfasst, wobei jeder der beiden Teile mindestens einen, bevorzugt zwei der Vorsprünge (212) umfasst, die mit den Befestigungsmitteln (213, 217, 218, 221) versehen sind.

3. Verbindungssystem nach einem der Ansprüche 1 oder 2, wobei jede Vertiefung (211) und jeder Riegel (210) jeweils eine erste (210a, 211 a), eine zweite (210b, 211 b) und eine dritte Fläche (210c, 211 c) umfassen, wobei die ersten Flächen (210a, 211 a) jeder Vertiefung (211) und jedes Riegels (210) im Wesentlichen parallel zum Umfang jedes der Flansche (103, 203, 403, 104, 204, 404) sind und einander ergänzen, wobei sich die zweiten (211 b) und dritten (211 c) Flächen jeder Vertiefung von der ersten Fläche (211 a) jeder Vertiefung (211) aus erstrecken und damit einen Winkel α bilden, wobei die zweite Fläche (210b) und die dritte Fläche (210c) jedes Riegels (210) jeweils angeordnet sind, um mit der zweiten Fläche (211 b) und der dritten Fläche (211 c) jeder Vertiefung (211) in engem Kontakt zu stehen.

4. Verbindungssystem nach einem der Ansprüche 1 bis 3, wobei der Winkel α in einem Bereich von 15° bis 90°, bevorzugt von 30° bis 60° enthalten ist.

5. Verbindungssystem nach einem der vorhergehenden Ansprüche, wobei jeder Riegel (210) und die zusammengefügten Flansche (103, 203, 403, 104, 204, 404) die gleiche Breite aufweisen.

6. Verbindungssystem nach einem der vorhergehenden Ansprüche, wobei die Proximalfläche (103p, 203p, 403p, 104p, 204p, 404p) und die Distalfläche (103d, 203d, 403d, 104d, 204d, 404d) eines jeden der Flansche (103, 203, 403, 104, 204, 404) zueinander in einem Winkel β geneigt sind, wobei die Distalfläche (103d, 203d, 403d, 104d, 204d, 404d) jedes Flansches zu einer Längsachse des röhrenförmigen Elements (101, 201, 401, 102, 202, 402) rechtwinklig ist, und wobei die Seitenflächen (215a, 215b) der Schelle (214) ebenfalls zueinander in einem Winkel γ geneigt sind, der kleiner ist als 2xβ.

7. Verbindungssystem nach einem der vorhergehenden Ansprüche, wobei der Riegel (210) ein Vollprisma mit trapezförmigem Querschnitt ist.

8. Verbindungssystem nach einem der vorhergehenden Ansprüche, wobei die Befestigungsmittel (213, 217, 218, 221) der Vorsprünge (212) des Anschlussriegels (210) eine Öffnung (217) umfassen, in die ein Stift (218) eingefügt wird, insbesondere ein Gewindestift (218), und wobei die ergänzenden Befestigungsmittel (216, 218, 219, 220, 221) der Schelle (214) auch Vorsprünge (219) umfassen, die mit Öffnungen (220) versehen sind, in die der Gewindestift (218) eingefügt wird.

9. Verbindungssystem nach einem der vorhergehenden Ansprüche, wobei die Schelle angeordnet ist, um teilweise den Riegel zu überlagern, wenn die Befestigungsmittel der Vorsprünge des Riegels an die Befestigungsmittel der Schelle angeschlossen sind.

10. Gehäuse eines Axialkompressors, z.B. eines Niederdruckkompressors eines Turboluftstrahltriebwerks oder Turbopropellertriebwerks, umfassend eine Vielzahl von Rohrringen (101, 201, 401, 102, 202, 402), von denen mindestens zwei nebeneinanderliegen und durch ein Verbindungssystem nach einem der vorhergehenden Ansprüche verbunden sind.

11. Axialkompressorgehäuse nach Anspruch 10, wobei mindestens einer der beiden nebeneinanderliegenden Rohrringe (101, 201, 401, 102, 202, 402) ein Leitrad und/oder eine einlauffähige Innenfläche umfasst.

12. Verwendung eines Verbindungssystems nach einem der Ansprüche 1 bis 9 zum Verbinden von mindestens zwei nebeneinanderliegenden Rohrringen (101, 201, 401, 102, 202, 402) eines Gehäuses eines Axialkompressors, z.B. eines Niederdruckkompressors eines Turboluftstrahltriebwerks oder eines Turbopropellertriebwerks.

13. Verwendung nach Anspruch 12, wobei mindestens einer der beiden angrenzenden Rohrringe (101, 201, 401, 102, 202, 402) ein Leitrad und/oder eine einlauffähige Innenfläche umfasst.
